# EUROPÄISCHE PATENTSCHRIFT

(11) **EP 0 460 518 B1**
(45) Veröffentlichungstag und Bekanntmachung des Hinweises auf die Patenterteilung: **28.12.1994**
(21) Anmeldenummer: 91108760.9
(22) Anmeldetag: 29.05.1991
(51) Int. Cl.: B29C 65/18, B29C 65/74

(54) **Vorrichtung zum Schweissen und Trennen oder Perforieren einer Kunststoffolienbahn**
Apparatus for sealing and cutting or perforating a plastic web
Dispositif pour souder et couper ou perforer une feuille en matière plastique

(30) Priorität: 02.06.1990 DE 4017906
(43) Veröffentlichungstag der Anmeldung: 11.12.1991
(73) Patentinhaber: Stiegler Maschinenfabrik GmbH & Co KG, D-73635 Ruderberg (DE)
(72) Erfinder: Bochtler, Franz, W-7062 Rudersberg (DE)
(74) Vertreter: Müller-Gerbes, Margot, Dipl.-Ing.

(56) Entgegenhaltungen:
- CA-A- 914 048
- GB-A- 1 532 952
- GB-A- 2 033 296
- US-A- 2 766 363
- US-A- 2 837 883
- US-A- 3 321 353
- US-A- 3 473 995
- US-A- 3 874 976
- US-A- 4 019 947

## Beschreibung

Die Erfindung betrifft eine Vorrichtung zum Schweißen und Trennen oder Perforieren einer schrittweise in ihrer Längsrichtung bewegten Folienbahn aus thermoplastischem Kunststoff quer zu ihrer Bewegungsrichtung mit mindestens einer an einem stationären Schweißstempel befestigten Schweißleiste mit einem Heizband und mindestens einer an einem auf den stationären Schweißstempel hinzu- und wegbewegbaren Schweißstempel unter der Wirkung einer am bewegbaren Schweißstempel abgestutzten Federanordnung gehalterten Schweißleiste mit einem Heizband sowie mit einem parallel zu den Schweißleisten auf- und niederbewegbaren Trenn- und/oder Perforationsmesser und mindestens einer an dem bewegbaren Schweißstempel unabhängig von der Schweißleiste federnd gelagerten mit der stationären Schweißleiste zusammenwirkenden Klemmleiste.

Eine derartige Vorrichtung zum Herstellen von Doppelschweißnähten mit paarweise angeordneten Schweißleisten ist aus der DE-PS 26 60 591 bekannt. Bei dieser Vorrichtung ist jedoch nur eine der beiden an dem oberen bewegbaren Schweißstempel angebrachten Schweißleisten gegenüber dem oberen Schweißstempel vertikal bewegbar und an dem Schweißstempel unter der Wirkung einer Federanordnung abgestützt.

Aus der DE-OS 34 43 914 ist eine Vorrichtung zum Querschweißen und Quertrennen oder Querperforieren einer in ihrer Längsrichtung bewegten Bahn bekannt, bei der eine obere beheizbare und mit einem Spalt versehene Schweißleiste mit dem Schweißstempel entgegen der Wirkung einer Federanordnung auf eine untere stationär angeordnete Schweißleiste hinzu- und wegbewegbar ist. Die Schweißleiste ist mit einem Spalt an der Unterseite ausgebildet, wodurch zwei voneinander beabstandete Schweißkanten entstehen. Die obere bewegbare Schweißleiste ist nur als Ganzes bewegbar, d.h. die beiden Schweißkanten sind nicht unabhängig voneinander bewegbar. Die untere Schweißleiste ist ein stationärer Körper. Unterschiedliche Verwerfungen beim Herstellen von Doppelnähten sind mit dieser Schweißeinrichtung nicht ausgleichbar.

Aus der DE-PS 32 01 170 ist eine Vorrichtung zum Querschweißen einer Kunststoffolienbahn bekannt, bei der ein Oberstempel, an dem zwei Klemmbacken ausgebildet sind, auf- und niederbewegbar ist und auf einem stationär angeordneten Unterstempel mit zwei Gegenklemmbacken auftrifft. Zwischen den beiden Klemmbacken des Oberstempels und des Unterstempels ist in einem Spalt ein Trennmesser angeordnet ist. Die Klemmbacken sowie die Gegenklemmbacken sind mit einer Heizeinrichtung zum Schweißen ausgerüstet.

Für die Herstellung einwandfreier Schweißnähte ist ein gleichmäßiges Andrücken der Schweißleisten zum Herstellen der Schweißnähte gegen die auf einer Gegenseite aufliegende Folienbahn erforderlich. Je breiter die zu verschweißende Folienbahn ist, desto stärker wirken sich bei der hohen thermischen Belastung der Schweißleisten bei hohen Produktionsgeschwindigkeiten die thermischen Dehnungen der Schweißleisten auf, die zum Verziehen oder Verwerfen der Schweißleisten führen, insbesondere der bewegbaren Schweißleisten. Man hat aus diesem Grunde vielfach das Gegenlager zu den bewegbaren Schweißleisten nachgiebig ausgebildet, um bei in Querrichtung verzogener Schweißleiste eine Berührung über die gesamte Schweißleistenlänge zu erhalten. Das hat jedoch eine ungleichförmige Andrückkraft zur Folge, was wiederum zur Erzeugung ungleichmäßiger Schweißnähte führt. Aus diesem Grunde hat man, wie aus den vorgenannten Druckschriften hervorgeht, die mit dem Schweißstempel bewegbare Schweißleiste gegen eine Federkraft nachgebend abgestützt, um eine gleichmäßige Anlage der Schweißleiste über ihre ganze Länge, d.h. die Länge der Schweißnaht, zu erreichen. Hierbei hat man nach der DE-OS 34 43 914 zusätzlich die Schweißleiste nachgiebig durch Ausbilden von Schlitzen gestaltet.

Bei der aus der GB-A-2033296 bekannten Vorrichtung hat man zur Erzielung unterschiedlicher Anpreßdrücke über die Länge der Schweißleiste diese in eine Vielzahl von Segmenten über die Länge unterteilt, und jedes Segment unabhängig von den anderen federnd und vertikal gegen die zu schweißende Naht verschieblich in einem Grundkörper gelagert. Die Beheizung zur Erzeugung der Schweißwärme erfolgt mittels in dem Grundkörper untergebrachter Heizpatronen durch Wärmeleitung bis zur Schweißstelle. Ein gleichmäßiger Anpreßdruck über die ganze Länge der Schweißnaht ist mit dieser Vorrichtung nicht erreichbar.

Die bekannten Vorrichtungen genügen jedoch nicht in jedem Fall den gestellten Anforderungen. Bei der Ausführung nach der DE-PS 26 60 591 wirkt sich als nachteilig aus, daß nur eine der beiden separat voneinander ausgeführten oberen Schweißleisten nachgebend unter Federkraft ausgebildet ist. Bei einer Anordnung gemäß der DE-PS 32 01 170 sind die zum Herstellen einer Doppelnaht benötigten zwei Schweißleisten nur als ein gemeinsam bewegbares Teil ausgebildet.

Es hat sich auch herausgestellt, daß der Ausgleich thermischer Dehnungen infolge der großen Massen der Schweißleisten, insbesondere bei großen bzw. langen Schweißnähten, schwierig zu beherrschen ist. Andererseits müssen die Schweißleisten auch zur Abfuhr der Schweißwärme und Erzeugung gleichmäßig hoher Anpreßkräfte eine gewisse Masse aufweisen, deshalb sind sie auch kühlbar ausgebildet, beispielsweise mit Kühlkanälen, durch welche eine Kühlflüssigkeit strömt.

Die Erfindung schlägt nun zur Lösung der gestellten Aufgabe und auch der aufgeführten Widersprüche zur Erzeugung einer gleichmäßigen Anpreßkraft für die Schweißung zum Herstellen einwandfreier Schweißnähte vor, die gattungsgemäße Vorrichtung in der Weise weiterzubilden, daß die am bewegbaren Schweißstempel befestigte mindestens eine Schweißleiste senkrecht zur Bewegungsrichtung des Schweißstempels in einen starr am auf- und niederbewegbaren Schweißstempel befestigten massereichen und die Kühlung umfassenden eine Schweißträgerleiste bildenden Teil und in einen demgegenüber eine wesentlich kleinere Masse aufweisenden beweglich federnd an der Schweißträgerleiste gelagerten und das Heizband enthaltenden eine Schweißprofilleiste bildenden Teil unterteilt ist.

Erfindungsgemäß wird also die mittels Federn an die Unterlage anzupressende Schweißleiste mit Heizband durch Zweiteilung der Schweißleiste in zwei Funktionsbereiche erheblich verkleinert und damit wesentlich effektiver gemacht. Der bewegbare federnd gelagerte Teil der Schweißleiste mit dem Heizband zum Herstellen der Schweißnaht ist so klein wie möglich gehalten und umfaßt nun nur noch den kleineren Teil der Schweißleiste und wird als Schweißprofilleiste bezeichnet. Der statische, d.h. starr gelagerte und die Kühlung umfassende Teil der Schweißleiste ist nicht mehr ausbiegbar und auch nicht mehr federnd gelagert. Damit wird eine wesentlich gleichmäßigere Anpressung des Heizbandes und gleichmäßigere Ausbildung der Schweißnaht bei geringeren Drücken erreicht. Darüber hinaus ist eine einwandfreie Führung der federnd angepreßten Schweißprofilleiste innerhalb der verbleibenden Schweißträgerleiste möglich, wobei auch der Verschiebeweg der Schweißprofilleiste begrenzbar ist.

Bevorzugte und vorteilhafte Ausgestaltungen der Erfindung gehen aus den Unteransprüchen 2 bis 7 hervor. Für das einwandfreie Schweißen von Doppelnähten bei Kunststoffolienbahnen mit einer Schweißeinrichtung der gattungsgemäßen Art werden zwei parallel zueinander an einem bewegbaren Schweißstempel angebrachte und jeweils unterteilt ausgebildete Schweißleisten mit einer starr an dem bewegbaren Schweißstempel befestigten Schweißträgerleiste und je einer mittels einer verstellbaren Federanordnung nachgebbar an der Schweißträgerleiste gehalterten Schweißprofilleiste vorgesehen. Dazu kann der bewegbare Schweißstempel in Bewegungsrichtung der Folienbahn vor und nach den Schweißleisten mit je einer mit der jeweils gegenüber angeordneten stationären Schweißleiste zusammenwirkenden Klemmleiste ausgerüstet sein. Auch diese Klemmleisten können entweder in ihrer Gänze federnd an dem Schweißstempel gelagert oder ebenfalls durch Teilung nur in dem an die Klemmfläche angrenzenden Teil federnd und nachgebend in dem restlichen Klemmleistenteil an dem Schweißstempel gehalten werden.
Durch die Ausbildung jeweils einer kleinen innerhalb der Gesamtschweißleiste geführten und abgefederten Schweißprofilleiste zum Herstellen von Schweißnähten bzw. Doppelschweißnähten wird dem Verziehen der Schweißprofilleisten während des Betriebes und Verschweißens entgegengewirkt bzw. kann dieses ausgeglichen werden und gleichmäßige Schweißnähte über die ganze Breite der Folienbahn erzielt werden. Insbesondere ist es möglich, die Schweißprofilleiste hart und steif auszubilden nach Art eines Federstahlbandes und durch die Federanordnungen sehr gleichmäßig hohe Andrückkräfte und ein gleichmäßiges Andrücken dieser Schweißprofilleiste an die Folienbahn und Gegen-Schweißstempel zu erzielen. Die Beheizung der Schweißprofilleisten erfolgt bevorzugt mittels auf die Schweißprofilleisten an den Arbeitsflächen aufgebrachter Heizbänder, die die Schweißflächen bilden. Die Wärme wird über die kühlbaren Schweißträgerleisten abgeführt.

Die Erfindung ermöglicht eine voneinander unabhängige Beweglichkeit und Andrückbarkeit zweier Heizbänder bei der Herstellung von Doppelschweißnähten während des Schweißvorganges.

Ein Ausführungsbeispiel der Erfindung wird anhand der Figuren näher erläutert. Es zeigen
- Figur 1: den Querschnitt EE gemäß Fig. 4 durch eine Schweißeinrichtung mit oberem bewegbarem Schweißstempel
- Figur 2: einen Querschnitt durch den unteren stationären Schweißstempel der Schweißeinrichtung gemäß Fig.1
- Figur 3: ein Detail der Figur 1
- Figur 4: die Vorderansicht der Schweißeinrichtung gemäß Figur 1.

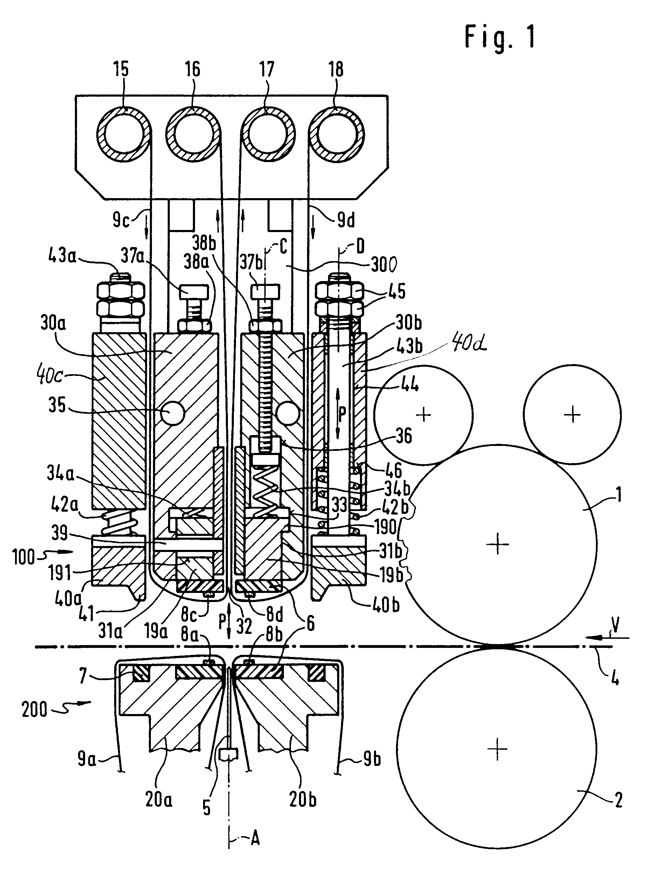

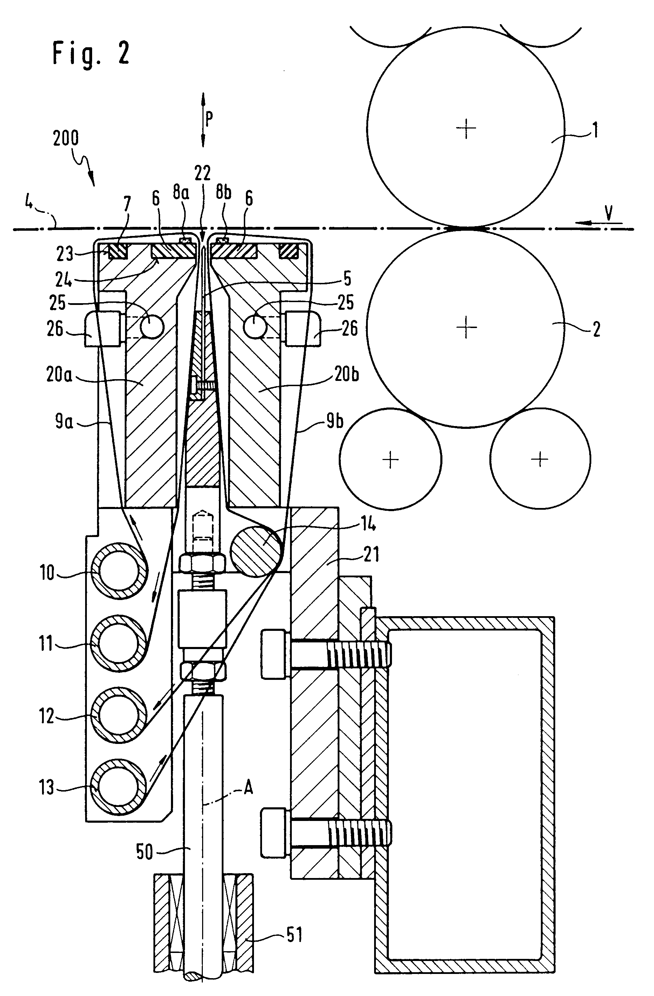

Figur 1 zeigt eine Schweißstation einer Beutelherstellungsmaschine zum Schweißen und Trennen einer doppellagigen thermoplastischen Folienbahn 4, die in Bewegungsrichtung - Vorschubrichtung Pfeil V - taktweise transportiert wird durch Herstellen von Schweißnähten, und zwar Doppelnähten mit einem Trennschnitt dazwischen quer zur Bewegungsrichtung V. Die Schweißstation besteht aus dem oberen bewegbaren Schweißstempel 100, der im Querschnitt seiner Funktionsteile dargestellt ist und dem unteren stationären Schweißstempel 200. Bei der gezeigten Schweißstation ist der untere Schweißstempel 200 stationär angeordnet und der gesamte obere Schweißstempel 100 mit den die Schweißflächen bildenden Heizbändern 8c,d in bezug auf den unteren Schweißstempel 200 mit Hilfe eines nicht dargestellten Antriebes senkrecht zur Vorschubrichtung V der Folienbahn 4 in Pfeilrichtung P taktweise auf- und abbewegbar. Der schrittweise Vorschub der Folienbahn 4 erfolgt über die entsprechend taktweise angetriebenen Vorzugswalzen 1, 2, wobei das Vorziehen der Folienbahn durch nicht dargestellte Blasdüsen unterstützt wird. Der untere Schweißstempel 200 ist in der Figur 2 im Querschnitt dargestellt. Der untere Schweißstempel 200 weist zwei im Abstand voneinander und parallel zueinander angeordnete stationäre Schweißleisten 20a, 20b auf, die an dem Ständerrahmen 21 der Maschine befestigt sind. In dem zwischen den beiden Schweißleisten 20a, 20b gebildeten Spalt 22 ist ein Trennmesser 5 oder Perforiermesser angeordnet, das über einen nicht dargestellten Antrieb ebenfalls taktweise in seiner Längsachse A die senkrecht zur Vorschubrichtung V der Folienbahn 4 verläuft, ebenfalls in Pfeilrichtung P auf- und abbewegbar ist. Das Messer 5 ist mit seiner Halterung an einer Führungsstange 50 befestigt und in dem Lager 51 geführt und wird beispielsweise über eine Gelenkwelle angetrieben. Die Schweißleisten 20a, 20b sind an ihrer Arbeitsfläche, d.h. an ihrer der Folienbahn 4 zugewandten Fläche, mit den Heizbändern 8a, 8b ausgerüstet, die die Schweißflächen darstellen. Entsprechend der Breite der Folienbahn 4 bzw. der Länge der herzustellenden Schweißnähte erstrecken sich diese Heizbänder 8a, 8b über eine entsprechende Strecke quer zur Vorschubrichtung V der Folienbahn. Die Heizbänder 8a, 8b sind auf einer isolierenden Heizbandunterlage 6, beispielsweise aus einem Silikonhartglasgewebe aufgebracht, die wiederum in der Ausnehmung 24 an der Oberseite der Schweißleisten 20a, 20b bündig mit deren Oberseite abschließend angeordnet ist. Die Heizbandunterlage 6 schließt hierbei seitlich zur Mitte an den Spalt 22 an. Die Heizbänder 8a, 8b zusammen mit der Heizbandunterlage 6 sowie den Schweißleisten 20a, 20b bilden ein festes starres Widerlager für den bewegbaren Schweißstempel zum Herstellen von Doppelschweißnähten mit den Heizbändern 8a, 8b. Die Schweißleisten 20a, 20b sind des weiteren mit quer zur Folienbahnvorschubrichtung V verlaufenden Kühlbohrungen 25 versehen, die mit Anschlüssen 26 für die Zu- und Abfuhr von Kühlwasser ausgerüstet sind.

Um zu verhindern, daß das geschmolzene thermoplastische Material der Folienbahn an den Heizbändern 8a, 8b anhaftet, sind Isolierfolien 9a, 9b aus Polytetrafluorethylen über die Heizbänder 8a, 8b und über die Arbeitsflächen der Schweißleisten 20a, 20b gezogen. Hierbei ist je eine Isolierfolie um je eine Schweißleiste 20a, 20b gezogen, die jeweils von einer Rolle 10 bzw. 13 abgezogen und nach Umlaufen der jeweiligen Schweißleiste auf einer Gegenrolle 11 bzw. 12 wieder aufgewickelt wird. Die Isolierfolien 9a, 9b werden jeweils absatzweise nach Verbrauch im Bereich der Heizbänder 8a, 8b ein Stück weiterbewegt durch entsprechendes Drehen an den Rollen.

An der Arbeitsfläche der Schweißleisten 20a, 20b des unteren Schweißstempels 200 ist seitlich, und zwar außenseitig in bezug auf die Heizbänder 8a, 8b, jeweils in einer nutförmigen Ausnehmung 23 der Schweißleisten 20a bzw. 20b eine Gummieinlage 7, die bündig mit der Oberfläche der Schweißleisten abschließt, eingelegt. Diese Gummieinlagen 7 verlaufen parallel zu den Heizbändern 8a, 8b quer zur Folienbahnvorschubrichtung V über die ganze Breite der Schweißstempel und dienen als Gegenlager zu am oberen Schweißstempel angeordneten Klemmleisten 40a, 40b, siehe Figur 1.

Die Isolierfolien können auch aus einem anderen geeigneten Material hergestellt sein, beispielsweise aus einem Gewebe aus Glasfasern, das mit Polytetrafluorethylen beschichtet ist.

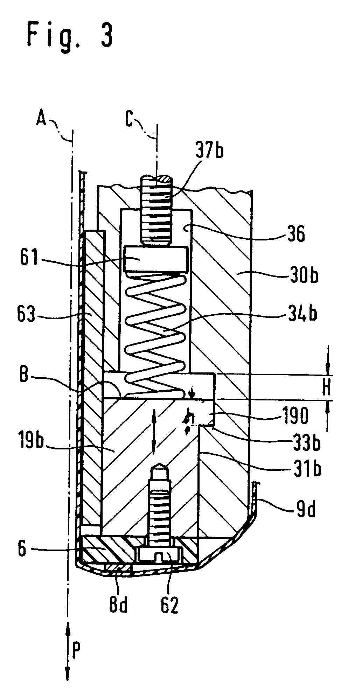

Der in Pfeilrichtung P auf- und abbewegbare Schweißstempel 100 ist gemäß Figur 1 zum Herstellen von Doppelnähten geeignet und mit zwei zueinander parallel angeordneten Heizbändern 8c, 8d in den Heizbändern 8a, 8b des stationären Schweißstempels 200 gegenüberliegender Position ausgerüstet. Der Schweißstempel 100 weist einen Tragkörper 300 auf, an dem die Heizbänder 8c, 8d federnd und parallel zur Bewegungsrichtung P verschiebbar und auch verstellbar mittels je einer geteilten Schweißleiste 19a, 30a bzw. 19b, 30b gehaltert sind. Die geteilten Schweißleisten 19a, 30a, bzw. 19b, 30b sind mit etwas Abstand nebeneinander angeordnet. Der Zwischenraum dient zum Einführen des Trennmessers 5. Die Schweißleisten sind in einer Ebene parallel zu den Heizbändern 8c, 8d und senkrecht zur Bewegungsrichtung P des Schweißstempels 100 in ein relativ großes massereiches und kühlbares mit dem Schweißstempel 100 starr verbundenes Teil 30a, 30b, das als Schweißträgerleiste bezeichnet ist, und in ein relativ kleines massearmes federbelastetes und gegen die Federkraft verschiebliches Teil 19a, 19b unterteilt, das als Schweißprofilleiste bezeichnet wird. Die Schweißprofilleiste ist mit der Schweißträgerleiste über eine Feder in Pfeilrichtung P verschieblich verbunden. Die Schweißträgerleisten 30a, 30b sind starr an dem Tragkörper 300 des Schweißstempels 100 befestigt und weisen an ihren der Folienbahn 4 zugewandten Arbeitsfläche die Ausnehmungen 31a, 31b für die Schweißprofilleisten auf. Die Ausnehmungen 31a, 31b weisen an einer Wand, die parallel zur Bewegungsrichtung P des Schweißstempels 100 verläuft, einen durchgehenden nutförmigen hinterschnittenen Bereich 33a, 33b auf, siehe auch Detailvergrößerung gemäß Figur 3. In diesen parallel zur Längserstreckung der Heizbänder und der Schweißträgerleisten 30a, 30b durchlaufenden Ausnehmungen mit einseitiger Nut 33a, 33b sind die Schweißprofilleisten 19a, 19b zwangsweise geführt eingesetzt. Dazu sind die Schweißprofilleisten 19a, 19b mit einem stegartigen Vorsprung 190a, 190b ausgebildet, der längs einer vertikalen Seite der Schweißprofilleiste in einer zur Bewegungsrichtung P senkrechten Ebene vorsteht und mit dem die Schweißprofilleiste 19a, 19b in der jeweiligen nutförmigen Hinterschneidung 33a bzw. 33b einhakt und geführt ist. Hierbei ist die Höhe H der Nut 33a, 33b größer als die Höhe h des Vorsprunges 190a, 190b der Schweißprofilleiste, so daß ein entsprechender Bewegungsraum in Pfeilrichtung P, d.h. senkrecht zur Vorschubrichtung V der Folienbahn verbleibt. An die Ausnehmungen 31a, 31b, die beide quer zur Vorschubrichtung V der Folienbahn in Längserstreckung der Schweißträgerleisten 30a, 30b verlaufen, schließen sich in vertikaler Richtung, d.h. in Bewegungsrichtung P des Schweißstempels 100 in Abständen ausgebildete Stufenbohrungen 36 an, in denen Druckfedern 34a, 34b untergebracht sind, die über Tragbolzen 37a, 37b mit Muttern 38a, 38b verstellbar sind.

Mit Hilfe der Tragbolzen kann die Vorspannung der Druckfedern 34a, 34b und damit die Andruckkraft der Schweißprofilleiste 19a, 19b eingestellt werden. Bei einer Breite einer Folienbahn von beispielsweise einem Meter und einer entsprechenden Länge der Schweißprofilleisten 19a, 19b werden beispielsweise acht bis zehn Druckfedern in gleichmäßigem Abstand über die Länge in der Schweißträgerleiste vorgesehen.

Die beiden unter Federkraftwirkung stehenden und senkrecht zur Vorschubrichtung V der Folienbahn 4 federnd an der Schweißträgerleiste 30a, 30b gelagerten Schweißprofilleisten 19a, 19b sind ebenfalls mit etwas Abstand unter Ausbildung des Spaltes 32 voneinander mit den Schweißträgerleisten 30a,b an dem Tragkörper 300 befestigt, so daß das Trennmesser bzw. Perforiermesser 5 aus dem unteren Schweißstempel entsprechend beim Hochfahren in diesen Spalt 32 eingreifen kann. Eine zusätzliche Führung der Schweißprofilleiste 19a, 19b in den Ausnehmungen 31a, 31b wird durch die in den Schweißträgerleisten 30a,b gelagerten Bolzen 39 erreicht, die sich parallel zur Vorschubrichtung der Folienbahn erstrecken und auf denen die Schweißprofilleisten 19a, 19b mit entsprechendem Spielraum mit ihren Durchgangsbohrungen 191 aufgesteckt sind.

An der dem unteren Schweißstempel zugewandten und der Folienbahn 4 zugewandten Oberfläche sind die Schweißprofilleisten 19a, 19b unter Zwischenordnung von Heizbandunterlagen 6 mit den Heizbändern 8c, 8d ausgerüstet, die quer zur Vorschubrichtung V über die Schweißprofilleisten verlaufen. Die Heizbandunterlagen 6 sind beispielsweise mittels Schrauben 62 an den Schweißprofilleisten befestigt. Für die Herstellung der Ausnehmungen 31a, 31b und 33a, 33b kann es zweckmäßig sein, diese als durchgehende Absätze in die Schweißträgerleisten 30a, 30b einzufräsen und dann an der offenen Seite, beispielsweise mittels an der Schweißträgerleiste befestigter Stützplatten 63, abzudecken, siehe Figur 3. Auch die oberen Heizbänder 8c, 8d, die die Schweißflächen und Gegenflächen zu den unteren Heizbändern 8a, 8b des unteren Schweißstempels bilden, sind mit Isolierfolien 9c, 9d, die über Spulen 15, 16 und 17, 18 schrittweise bewegt werden, abgedeckt. Die Schweißträgerleisten 30a, 30b sind mit Kühlkanälen 35 für das Durchleiten von Kühlwasser ausgebildet.

Die Schweißstation ist zusätzlich mit Klemmleisten 40a, 40c und 40b, 40d ausgerüstet, die am bewegbaren oberen Schweißstempel 100 federnd in Richtung P, d.h. senkrecht zur Vorschubrichtung V der Folienbahn, gelagert sind. Die Klemmleisten werden gleichzeitig mit der Bewegung der Schweißprofilleisten auf den unteren Schweißstempel 200 zu- bzw. wegbewegt und dienen zum Festklemmen der Folienbahn 4 während des Schweißvorganges. Die Klemmleisten, die sich ebenfalls quer zur Folienbahn parallel zu den Schweißleisten erstrecken, sind ebenfalls geteilt wie die Schweißleiste ausgeführt, um nur eine kleine Masse federnd verschieblich zur Anpassung der Andrückkraft zu bewegen. Die Klemmleiste ist ebenfalls in einer Ebene parallel zu den Heizbändern in ein oberes am Schweißstempel 100 starr befestigtes Oberteil 40c, 40d und ein federbelastetes gegen das Oberteil verschiebliches Unterteil 40a, 40b unterteilt. An ihrer dem unteren Schweißstempel zugewandten Seite weist das Klemmleistenunterteil 40a, 40b einen vorstehenden Steg 41 auf, der auf die Gummieinlage 7 der unteren Schweißleisten 20a, 20b drückt. Auch die Klemmleistenunterteile 40a, 40b sind an Tragbolzen 43 in dem Klemmleistenoberteil 40c, 40d unter Zwischenschaltung der Druckfedern 42a, 42b gehaltert. Hierbei sind über die Breite der Folienbahn gesehen ebenfalls mehrere Tragbolzen 43 mit Druckfedern in den Klemmleistenoberteilen angeordnet, insbesondere in der gleichen Anzahl wie bei der Halterung der Schweißprofilleiste 19a, 19b. Zur Aufnahme der Tragbolzen und Druckfedern ist das Klemmleistenoberteil mit entsprechender Stufenbohrung 46 ausgerüstet. Auch die Vorspannung der beweglichen abgefederten Klemmleistenunterteile 40a, 40b kann über Muttern 45 eingestellt werden. Die Längsachsen D der Tragbolzen 43 für die Klemmleisten sowie die Längsachsen C der Tragbolzen 37 für die Schweißprofilleisten sind senkrecht zur Vorschubrichtung V der Folienbahn und parallel zur Bewegungsrichtung P des bewegbaren Schweißstempels ausgerichtet.

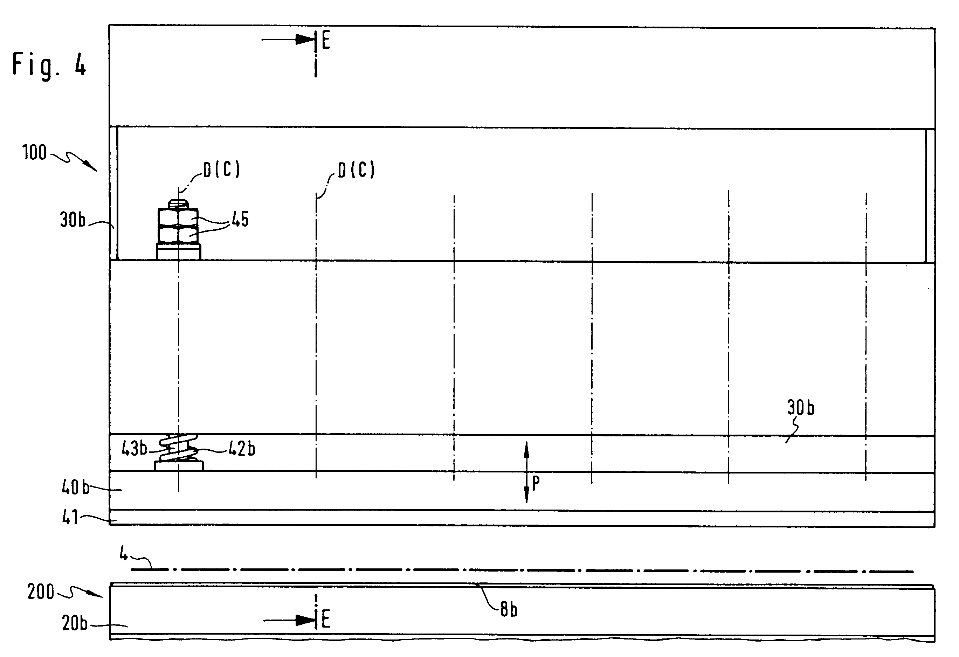

In der Figur 4 ist eine schematische Seitenansicht auszugsweise auf die Schweißeinrichtung nach Figur 1 dargestellt. Während der untere Schweißstempel 200 stationär angeordnet ist und damit die Schweißleisten ebenso starr angebracht sind, und lediglich die Gegenlager für die Klemmleisten nachgiebig durch eine Gummieinlage ausgebildet sind, sind im in Pfeilrichtung P auf- und abbewegbaren oberen Schweißstempel 100 sowohl die beiden Schweißprofilleisten unabhängig voneinander und auch die beiden Klemmleistenunterteile, die außenseitig der Schweißprofilleisten angeordnet sind, jeweils unabhängig voneinander federnd in Bewegungsrichtung des Schweißstempels gelagert. Hierbei sind sowohl die Klemmleistenunterteile 40a, 40b als auch die Schweißprofilleiste 19a, 19b mit gleichmäßig über die ganze Breite der Schweißeinrichtung und damit Breite der Folienbahn angeordneten Federn 42, 34 ausgerüstet.

Je nach Art der herzustellenden und zu verschweißenden Folienbahnen und Produkte kann die Erfindung für einfache Schweißnähte oder Doppelschweißnähte mit oder ohne Klemmleisten mit einer oder zwei Schweißleisten an einem Schweißstempel realisiert werden.

## Patentansprüche

1. Vorrichtung zum Schweißen und Trennen oder Perforieren einer schrittweise in ihrer Längsrichtung bewegten Folienbahn aus thermoplastischem Kunststoff quer zu ihrer Bewegungsrichtung mit mindestens einer an einem stationären Schweißstempel (200) befestigten Schweißleiste (20a, 20b) mit einem Heizband (8a, 8b) und mindestens einer an einem auf den stationären Schweißstempel hinzu- und wegbewegbaren Schweißstempel (100) unter der Wirkung einer am bewegbaren Schweißstempel abgestützten Federanordnung (34a, 34b) gehalterten Schweißleiste (30a, 30b) mit einem Heizband (8c, 8d) sowie mit einem parallel zu den Schweißleisten auf- und niederbewegbaren Trennund/oder Perforationsmesser (5) und mindestens einer an dem bewegbaren Schweißstempel unabhängig von der Schweißleiste federnd gelagerten mit der stationären Schweißleiste zusammenwirkenden Klemmleiste (40a, 40b), **dadurch gekennzeichnet**, daß die am bewegbaren Schweißstempel (100) befestigte mindestens eine Schweißleiste senkrecht zur Bewegungsrichtung des Schweißstempels in einen starr am auf- und niederbewegbaren Schweißstempel (100) befestigten massereichen und die Kühlung umfassenden eine Schweißträgerleiste bildenden Teil (30a, 30b) und in einen demgegenüber eine wesentlich kleinere Masse aufweisenden beweglich federnd an der Schweißträgerleiste (30a, 30b) gelagerten und das Heizband (8c, 8d) enthaltenden eine Schweißprofilleiste bildenden Teil (19a, 19b) unterteilt ist.

2. Vorrichtung nach Anspruch 1,
**dadurch gekennzeichnet**, daß die kühlbare Schweißträgerleiste (30a, 30b) verstellbar an dem Schweißstempel (100) befestigt ist.

3. Vorrichtung nach Anspruch 1 oder 2,
**dadurch gekennzeichnet**, daß die Schweißträgerleiste (30a, 30b) an der dem stationären Schweißstempel (200) zugewandten Fläche Ausnehmungen (31a, 31b; 36) aufweist, in denen parallel zur Bewegungsrichtung (P) des Schweißstempels (100) verstellbare Federanordnungen (34a, 37a; 34b, 37b) zusammen mit der daran verschiebbar gehalterten Schweißprofilleiste (19a, 19b) gelagert sind.

4. Vorrichtung nach einem der Ansprüche 1 bis 3,
**dadurch gekennzeichnet,** daß die Schweißprofilleiste (19a, 19b) einen über die Länge der Schweißprofilleiste und parallel zum Heizband sich in einer zur Heizbandebene senkrechten Ebene erstreckenden Vorsprung (190a, 190b) aufweist, mit dem sie in einer von der die Schweißprofilleiste aufnehmenden Ausnehmung (31a, 31b) ausgehenden nutförmigen sich über die Länge des Schweißleistenträgers (30a, 30b) erstreckenden Hinterschneidung (33a, 33b) geführt ist, wobei die Nuthöhe (H) der Hinterschneidung größer als die Höhe (h) des Vorsprungs (190a, 190b) ist und die Schweißprofilleiste (19a, 19b) in der Hinterschneidung (33a, 33b) entsprechend einem Bereich H minus h entgegen den Federkräften der Federanordnung (34a, 34b) parallel zur Bewegungsrichtung des Schweißstempels (100) verschiebbar bzw. ausbiegbar ist.

5. Vorrichtung nach einem der Ansprüche 1 bis 4,
**dadurch gekennzeichnet,** daß die Schweißträgerleiste (30a, 30b) in ihrer Erstreckung quer zur Bewegungsrichtung der Folienbahn mehrere gleichmäßig beabstandete in Bewegungsrichtung des Schweißstempels (100) verlaufende an die hinterschnittene Ausnehmung (31a, 31b) anschließende Durchgangsbohrungen (36) aufweist, in denen je eine Feder (34a, 34b) mit einem Tragbolzen (37a, 37b) untergebracht sind.

6. Vorrichtung nach einem der Ansprüche 1 bis 5,
**dadurch gekennzeichnet,** daß die Schweißprofilleisten (19a, 19b) als Aluminium gefertigt sind.

7. Vorrichtung nach einem der Ansprüche 1 bis 6,
**dadurch gekennzeichnet,** daß die an dem bewegbaren Schweißstempel (100) befestigten Klemmleisten senkrecht zur Bewegungsrichtung des Schweißstempels (100) in einen an den auf- und niederbewegbaren Schweißstempel befestigten die Federanordnung aufnehmenden Teil (40c, 40d) und in einen demgegenüber eine wesentlich kleinere Masse umfassenden beweglich federnd an dem am Schweißstempel befestigten anderen Teil (40c, 40d) gehalterten und den Klemmsteg (41) aufweisenden Teil (40a, 40b) unterteilt ist.

## Claims

1. Apparatus for sealing and cutting or perforating a foil web, which web is made of thermoplastic plastics material and is moved in steps in its longitudinal direction, transversely to the direction of its movement, the apparatus having at least one sealing bar (20a, 20b), with a heating strip (8a, 8b), secured on a stationary sealing die (200) and at least one sealing bar (30a, 30b), with a heating strip (8c, 8d), which is mounted on a sealing die (100) which can be moved towards and away from the stationary sealing die under the effect of a spring arrangement (34a, 34b) supported on the movable sealing die, and having a cutting and/or perforating blade (5) which can be moved up and down parallel to the sealing bars and at least one clamping bar (40a, 40b) which is resiliently mounted on the movable sealing die independently of the sealing bar and cooperates with the stationary sealing bar,
characterized in that the at least one sealing bar which is secured on the movable sealing die (100) is divided perpendicular to the direction of movement of the sealing die into a mass-rich part (30a, 30b) which is rigidly secured on the sealing die (100), which can be moved up and down, which encloses the cooling system, and which forms a sealing support bar, and into a part (19a, 19b) which has a substantially smaller mass with respect to the first part, which is movably and resiliently mounted on the sealing support bar (30a, 30b), which contains the heating strip (8c, 8d), and which forms a sealing profile bar.

2. Apparatus according to Claim 1, characterized in that the sealing support bar (30a, 30b), which can be cooled, is displaceably secured on the sealing die (100).

3. Apparatus according to Claim 1 or 2, characterized in that the sealing support bar (30a, 30b) comprises, on the surface facing the stationary sealing die (200), recesses (31a, 31b; 36) in which spring arrangements (34a, 37a; 34b, 37b) which can be displaced parallel to the direction of movement (P) of the sealing die (100) are mounted together with the sealing profile bar (19a, 19b) displaceably mounted on said spring arrangements.

4. Apparatus according to any one of Claims 1 to 3, characterized in that the sealing profile bar (19a, 19b) comprises a projection (190a, 190b) which extends over the length of the sealing profile bar and parallel to the heating strip in a plane perpendicular to the heating strip plane and by means of which projection the sealing profile bar (19a, 19b) is guided in a groove-like undercut (33a, 33b) which extends from the recess (31a, 31b) accommodating the sealing profile bar and which extends over the length of the sealing bar support (sic) (30a, 30b), the groove depth (H) of the undercut being greater than the height (h) of the projection (190a, 190b) and the sealing profile bar (19a, 19b) in the undercut (33a, 33b) being displaceable or deflectable according to an amount H minus h against the spring forces of the spring arrangement (34a, 34b) parallel to the direction of movement of the sealing die (100).

5. Apparatus according to any one of Claims 1 to 4, characterized in that the sealing support bar (30a, 30b) comprises, in its extension transversely to the direction of movement of the foil web, a plurality of through-holes (36) which are at uniform spacings, which extend in the direction of movement of the sealing die (100), which adjoin the undercut recess (31a, 31b), and in each of which a spring (34a, 34b) with a carrier bolt (37a, 37b) is accommodated.

6. Apparatus according to any one of Claims 1 to 5, characterized in that the sealing profile bars (19a, 19b) are made as (sic) aluminium.

7. Apparatus according to any one of Claims 1 to 6, characterized in that the clamping bars (sic) secured to the movable sealing die (100) is divided perpendicular to the direction of movement of the sealing die (100) into a part (40c, 40d) secured on the sealing die which can be moved up and down and accommodating the spring arrangement, and into a part (40a, 40b) which has a substantially smaller mass in contrast to the first part, which is mounted movably and resiliently on the other part (40c, 40d) secured on the sealing die, and which comprises the clamping web (41).

## Revendications

1. Dispositif de soudage et de découpe ou de perforation, transversalement par rapport à sa direction de déplacement, d'une feuille en matière synthétique thermoplastique déplacée pas à pas dans sa direction longitudinale, comportant au moins une languette de soudage (20a, 20b) comportant une bande chauffante (Sa, 8b) et fixée sur un tampon stationnaire de soudage (200), et comportant au moins une languette de soudage (30a, 30b) comportant une bande chauffante (8c, 8d) et portée sur un tampon de soudage (100) qui peut se rapprocher et s'éloigner du tampon stationnaire de soudage sous l'action d'un système à ressorts (34a, 34b) soutenu sur le tampon mobile de soudage, et comportant également un couteau (5) de découpe et/ou de préparation pouvant se relever et s'abaisser parallèlement aux languettes de soudage, et comportant au moins une languette de serrage (40a, 40b) coopérant avec la languette stationnaire de soudage, et montée élastiquement sur le tampon mobile de soudage, indépendamment de la languette de soudage, caractérisé en ce que la languette de soudage, au moins au nombre de un, fixée sur le tampon mobile de soudage (100) est divisée en une partie (30a, 30b) massive, formant une languette porteuse de soudage, fixée rigidement sur le tampon de soudage (100) pouvant se déplacer vers le haut et vers le bas et comprenant le système de refroidissement, et en une partie (19a, 19b) présentant par rapport à la première une masse considérablement plus petite, formant une languette profilée de soudage, montée élastiquement sur la languette porteuse de soudage (30a, 30b) et contenant la bande chauffante (8c, 8d).

2. Dispositif selon la revendication 1, caractérisé en ce que la languette porteuse de soudage (30a, 30b) pouvant être refroidie est fixée de manière réglable sur le tampon de soudage (100).

3. Dispositif selon la revendication 1 ou 2, caractérisé en ce que la languette porteuse de soudage (30a, 30b) présente sur sa surface tournée vers le tampon stationnaire de soudage (200) des évidements (31a, 31b; 36) dans lesquels des systèmes réglables à ressorts (34a, 37a; 34b, 37b) sont montés parallèlement à la direction de déplacement (P) du tampon de soudage (100), ensemble avec les languettes profilées de soudage (19a, 19b) maintenues à déplacement sur eux.

4. Dispositif selon l'une des revendications 1 à 3, caractérisé en ce que la languette profilée de soudage (19a, 19b) présente une saillie (190a, 190b) s'étendant dans un plan perpendiculaire au plan de la bande chauffante, parallèlement à la bande chauffante et suivant la longueur de la languette profilée de soudage, saillie par laquelle elle est guidée dans une découpe en retrait (33a, 33b) s'étendant en forme de rainure sur la longueur du support de languette de soudage (30a, 30b) et partant de l'évidement (31a, 31b) recevant la languette profilée de soudage, la hauteur (H) de la rainure de la découpe en retrait étant plus grande que la hauteur (h) de la saillie (190a, 190b), et la languette profilée de soudage (19a, 19b) peut se déplacer ou se courber dans la découpe en retrait (33a, 33b), parallèlement à la direction de déplacement du tampon de soudage (100), dans une plage H moins h, en opposition aux forces élastiques du système à ressorts (34a, 34b).

5. Dispositif selon l'une des revendications 1 à 4, caractérisé en ce que la languette porteuse de soudage (30a, 30b) présente dans la direction transversale à la direction de déplacement de la feuille plusieurs alésages de passage (36), régulièrement espacés, et dans chacun desquels un ressort (34a, 34b) comportant un goujon porteur (37a, 37b) est installé, qui se raccordent à l'évidement découpé en retrait (31a, 31b) et s'étendent dans la direction de déplacement du tampon de soudage (100).

6. Dispositif selon l'une des revendications 1 à 5, caractérisé en ce que les languettes profilées de soudage (19a, 19b) sont réalisées en aluminium.

7. Dispositif selon l'une des revendications 1 à 6, caractérisé en ce que la languette de serrage fixée sur le tampon mobile de soudage (100) est divisée perpendiculairement par rapport à la direction de déplacement du tampon de soudage (100) en une partie recevant le système à ressorts et fixée au tampon de soudage pouvant se relever et s'abaisser, et en une partie (40a, 40b) ayant par rapport à la première une masse considérablement plus petite, présentant la latte de serrage (41) et pouvant se déplacer élastiquement sur l'autre partie (40c, 40d) fixée au tampon de soudage.
